# EUROPÄISCHE PATENTSCHRIFT

(11) **EP 1 888 946 B1**
(45) Veröffentlichungstag und Bekanntmachung des Hinweises auf die Patenterteilung: **05.11.2008**
(21) Anmeldenummer: 06754123.5
(22) Anmeldetag: 03.06.2006
(51) Int. Cl.: F16H 61/00

(54) **AUTOMATISIERTES VORGELEGEGETRIEBE UND VERFAHREN ZU DESSEN HERSTELLUNG**
AUTOMATED PRESELECTOR GEARBOX AND METHOD FOR PRODUCTION THEREOF
BOITE AUTOMATIQUE A RENVOI ET PROCEDE DE FABRICATION DE LADITE BOITE

(30) Priorität: 10.06.2005 DE 102005028122
(43) Veröffentlichungstag der Anmeldung: 20.02.2008
(73) Patentinhaber: GETRAG Getriebe- und Zahnradfabrik Hermann Hagenmeyer GmbH & Cie KG, 74199 Untergruppenbach (DE)
(72) Erfinder: RUEHLE, Guenter, 74369 Loechgau (DE); FLAIG, Armin, 74523 Schwaebisch Hall (DE); SCHMID, Elmar, 71717 Beilstein (DE)
(74) Vertreter: Steil, Christian
(86) Internationale Anmeldenummer: PCT/EP2006/005343
(87) Internationale Veröffentlichungsnummer: WO 2006/131287

(56) Entgegenhaltungen:
- EP-A1- 0 541 035
- EP-A2- 0 142 221
- DE-A1- 19 637 001
- US-A- 4 928 544

## Beschreibung

Die vorliegende Erfindung betrifft ein automatisiertes Vorgelegegetriebe gemäß dem Oberbegriff des Anspruchs 1 sowie ein Verfahren zu dessen Herstellung. Die Merkmale des Oberbegriffs von Anspruch 1 sind aus der EP-A-541035 bekannt.

Automatisierte Vorgelegegetriebe werden mit Hilfskraft geschaltet. Diese Hilfskraft kann durch eine entsprechende Hydraulik erzeugt werden. Für die Hydraulik und die Aktuatorik sind verschiedene Ausführungsformen bekannt. Beispielsweise bei einem ASG-Getriebe für den BMW M3 ist die Hydraulikversorgung in einer separaten Einheit als Speicher-Ladeeinheit realisiert, und die Aktuatorik ist als "add-on"-System an die zentrale Schaltwelle des Getriebes angekoppelt.

Bei einer weiteren Entwicklungsstufe eines automatisierten Schaltgetriebes für den BMW M5 wurde die Hydraulik ebenso als Speicher-Ladeeinheit ausgeführt. Die komplette Hydraulikversorgung wurde jedoch an das Getriebe angebaut. Die Aktuatorik wurde in Form der Hydraulikzylinder und Kolben in einem Hydraulikblock zusammen mit den Ventilen und der Wegsensorik in das Getriebe integriert.

Bei einem Doppelkupplungsgetriebe, das von Volkswagen in der Serie eingesetzt wird, ist die Hydraulik mit ihren Funktionen "Flowmanagement", "Kupplungsmanagement", "Getriebeschaltung" und "Kühlung/Schmierung" in einem Hydraulikmodul zusammengefasst. Die Hydraulikzylinder mit den Kolben für die Schaltungsbetätigung sind dezentral in dem Getriebegehäuse angeordnet.

Vor diesem Hintergrund ist es die Aufgabe der vorliegenden Erfindung, ein verbessertes automatisiertes Vorgelegegetriebe, insbesondere ein automatisiertes Schaltgetriebe oder Doppelkupplungsgetriebe, sowie ein verbessertes Verfahren zu dessen Herstellung anzugeben.

Diese Aufgabe wird durch ein automatisiertes Vorgelegegetriebe mit den Merkmalen des Anspruchs 1 sowie durch ein Verfahren zur Herstellung eines automatisierten Vorgelegegetriebes mit den Merkmalen des Anspruchs 17 gelöst.

Erfindungsgemäß sind die Hydraulikfunktionen des Vorgelegegetriebes komplett in einem Mechatronik-Modul zusammengefasst, also nicht aufgeteilt nach einzelnen Funktionsgruppen geometrisch an geeigneter Stelle im oder am Gehäuse angeordnet. Dies führt zu einer verringerten Komplexität der hydraulischen Leitungsführung im Getriebegehäuse. Auch der Aufwand der elektrischen Verkabelung von Magnetventilen (elektrisch angesteuerten Ventilen) und der Sensorik ist verringert. Der Montageaufwand am Getriebemontageband kann vereinfacht werden.

Schließlich ist die Anzahl der internen oder externen elektrischen Steckverbindungen sowie Gehäusedurchführungen verringert. Dies kann die Ausfallrate im Feld verringern und die Zuverlässigkeit der Getriebefunktionalität erhöhen.

Auch ist eine Prüfung der kompletten hydraulischen Sekundärfunktionen auch ohne das Gesamtgetriebe möglich. Hierdurch kann die Prüfzeit am Getriebeabnahmeprüfstand verringert werden. Bei festgestellten Fehlern in dem Mechatronik-Modul wird dieses gar nicht erst eingebaut, so dass kein Rückmontageaufwand auftritt.

Erfindungsgemäß ist es bevorzugt, wenn sämtliche hydraulischen Sekundärfunktionen in dem Mechatronik-Modul zusammengefasst sind, einschließlich der Schaltaktuatorik. Dieses Mechatronik-Modul kann nach der Vormontage außerhalb des Getriebes hydraulisch geprüft werden und mit dem elektronischen Steuergerät und der Sensorik verbunden werden. Auch können die Ventilkennlinien von Proportionalventilen eingelernt werden.

Die Funktionen können an einem einfacheren Prüfstand getestet werden. Die Einheit kann somit als vorgeprüftes und eingelerntes System ans Getriebemontageband zum Anbau geliefert werden. Es entfallen am Getriebeabnahmeprüfstand die Prüfung der Hydraulikfunktion und das Einlernen bzw. die Justierung der Proportionalventile. Dies führt zu einer Zeiteinsparung bei der Getriebeabnahme.

Fehler an der Hydraulik und/oder an Sensoren werden bereits vor dem Anbau an das Getriebe entdeckt. Aufwändige Demontagen zum Zwecke von Nacharbeiten werden vermieden.

Durch die Integration der Schaltaktuatorik in das Mechatronik-Modul werden Hydraulikleitungen im Getriebegehäuse eingespart. Bei der Funktionsprüfung des Moduls kann dann gleich der gesamte oder zumindest ein großer Teil der Hydraulikfunktion geprüft werden.

Die Montage des Mechatronik-Moduls erfolgt vorzugsweise in einer Umgebung mit erhöhter Sauberkeit (Sauberraum). Dies gilt jedoch nicht für die gesamte Getriebemontage.

Durch die hohe Integrationsdichte kann bei optimalen Kosten eine größtmögliche Funktionalität dargestellt werden.

Mit der vorliegenden Erfindung wird wenigstens einer der oben beschriebenen Vorteile erzielt.

Bevorzugte Ausführungsformen sind in den Unteransprüchen angegeben.
- Fig. 1: zeigt eine schematische Querschnittsansicht einer ersten Ausführungsform eines erfindungsgemäßen Vorgelegegetriebes;
- Fig. 2: zeigt eine schematische Detailansicht einer Modifikation des Vorgelegegetriebes der Fig. 1;
- Fig. 3: zeigt eine schematische Querschnittsansicht eines Details einer Modifikation des in Fig. 1 gezeigten Vorgelegegetriebes;
- Fig. 4: zeigt eine bevorzugte Ausführungsform des erfindungsgemäßen Vorgelegegetriebes in einer schematischen Querschnittsansicht; und
- Fig. 5: zeigt eine schematische Darstellung eines erfindungsgemäßen Vorgelegegetriebes gemäß einer weiteren Aus-führungsform.

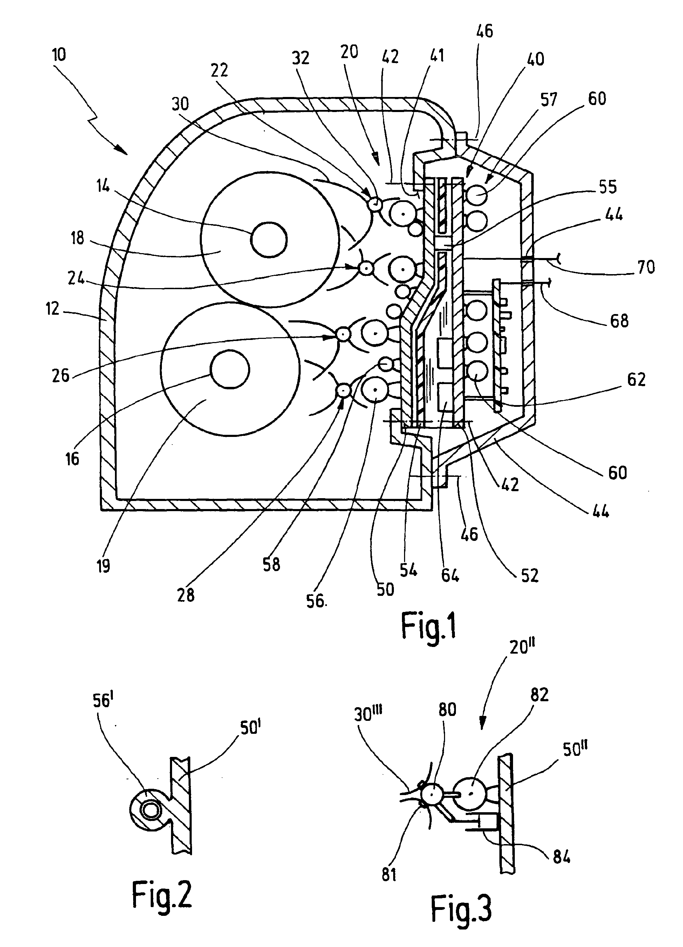

Eine erste Ausführungsform eines erfindungsgemäßen Vorgelegegetriebe 10 ist in Fig. 1 dargestellt.

Das Vorgelegegetriebe 10 weist ein Gehäuse 12 auf, innerhalb dessen eine erste Welle 14 und eine hierzu parallele zweite Welle 16 drehbar gelagert sind.

Das Vorgelegegetriebe 10 kann beispielsweise als Handschaltgetriebe, als automatisiertes Schaltgetriebe, als Doppelkupplungsgetriebe etc. aufgebaut sein.

An der ersten Welle 14 ist eine Mehrzahl von Zahnrädern gelagert, von denen eines in Fig. 1 mit 18 bezeichnet ist. An der zweiten Welle 16 ist eine Mehrzahl von Zahnrädern gelagert, von denen eines in Fig. 1 mit 19 bezeichnet ist.

Das Vorgelegegetriebe 10 weist ferner eine Schaltanordnung 20 auf, die dazu dient, Zahnradpaarungen in den Kraftfluss zu schalten bzw. aus dem Kraftfluss herauszunehmen.

Die Schaltanordnung 20 weist vier Schalteinheiten 22, 24, 26, 28 auf, die jeweils zur Betätigung eines Schaltkupplungspaketes dienen. Die Schalteinheiten 22-28 beinhalten jeweils ein Schaltglied, so beispielsweise eine Schaltgabel 30, die an einer Schaltmuffe eines Schaltkupplungspaketes angreift.

Ferner beinhaltet jede Schalteinheit 22-28 eine Schaltstange 32, die mittels einer noch näher zu beschreibenden Aktuatorik in Schaltrichtung (das heißt senkrecht zur Papierebene) versetzbar ist, um so das zugehörige Schaltglied 30 in axialer Richtung zu versetzen und folglich Gangstufen des Vorgelegegetriebes 10 in den Kraftfluss zu schalten oder aus ihm herauszunehmen.

Zur Betätigung der Schaltanordnung 20 und zur Steuerung derselben ist ein Mechatronik-Modul 40 vorgesehen. Das Mechatronik-Modul 40 ist dabei seitlich bzw. parallel zu den Wellen 14, 16 an ein Gehäuse 12 des Vorgelegegetriebes 10 angeflanscht. Das Gehäuse 12 des Vorgelegegetriebes 10 weist hierzu eine Öffnung auf, im vorliegenden Fall eine seitliche Öffnung 41. Die Flanschverbindung zwischen dem Gehäuse 12 und dem Mechantronik-Modul ist bei 42 gezeigt.

Das Mechatronik-Modul überdeckt die gesamte seitliche Öffnung 41 und kann das Gehäuse bei Bedarf 12 fluiddicht abdichten.

An der Außenseite des Mechatronik-Moduls 40 sind diverse, nachstehend zu beschreibende Mechatronik-Einheiten angeordnet. Über dem Mechatronik-Modul 40 ist ein Moduldeckel 44 angeordnet.

Der Moduldeckel 44 ist ebenfalls an dem Gehäuse 12 angeflanscht, und zwar über eine Flanschverbindung 46, die vorzugsweise fluiddicht ausgeführt ist.

Das Mechatronik-Modul 40 weist eine erste Hydraulikeinheit in Form einer Hydraulikplatte 50 auf, der im Wesentlichen sämtliche Funktionalitäten zur Verbindung mit der Schaltanordnung 20 des Vorgelegegetriebes zugeordnet sind. Das Mechatronik-Modul 40 weist eine zweite Hydraulikeinheit in Form einer zweiten Hydraulikplatte 52 auf, die auf der dem Inneren des Getriebes abgewandten Seite montiert ist und vorzugsweise sämtliche elektrisch angesteuerten Ventile 60, insbesondere Elektromagnetventile 60, beinhaltet. An der zweiten Hydraulikeinheit 52 ist ferner ein Elektronikmodul 62 mit einer elektrischen Steuervorrichtung vorgesehen. Das Elektronikmodul 62 kann eine vergossene elektrische Schaltung sein, die mittels geeigneter Steckverbindungen auf die zweite Hydraulikeinheit 52 aufgesteckt wird.

Zwischen den Hydraulikeinheiten 50, 52 ist eine Dichtplatte 54 ausgebildet, die die beiden Hydraulikeinheiten voneinander trennt. In der Dichtplatte 54 sind Öffnungen 55 vorgesehen, um hydraulische Übergabestellen zu schaffen.

Das Mechatronik-Modul 40 weist lediglich elektrische Anschlüsse 68 zur Verbindung beispielsweise mit Sensoren oder einer übergeordneten Steuereinheit auf. Ferner ist ein Hydraulikanschluss 70 vorgesehen, der beispielsweise auch als Gehäusekanal ausgebildet sein kann, und zwar im Wesentlichen zu einer Pumpenanordnung. Die Pumpe ist in der bevorzugten Ausführungsform nicht in das Mechatronik-Modul 40 integriert.

Generell werden sämtliche hydraulischen Sekundärfunktionen in dem Mechatronik-Modul zusammengefasst. Dies sind die Funktionen "Flowmanagement", "Schaltmanagement", sowie gegebenenfalls Kupplungsmanagement", "Parksperrenmanagement" und "Kühlungsmanagement" (Letzteres insbesondere bei Doppelkupplungsgetrieben, die Nasskupplungen aufweisen). Ferner ist in dem Mechatronik-Modul die Schaltaktuatorik integriert.

Das Mechatronik-Modul 40 besteht im Wesentlichen aus wenigstens zwei Hydraulikplatten 50, 52 und einer dazwischen liegenden Dichtplatte 54. In der ersten Hydraulikplatte 50, vorzugsweise in der dem Getriebe zugewandten, sind die hydraulisch angesteuerten Schieberventile 56 und die Schaltaktuatorik mit Schaltzylindern 56 integriert. Die Schaltzylinder 56 werden mittels der Schieberventile 58 angesteuert und dienen als Aktuatoren für die Schaltstangen 32.

In der zweiten Hydraulikplatte 52 sind vorzugsweise sämtliche elektrisch angesteuerten Ventile 60 angeordnet, derart, dass diese gut durch das Elektronikmodul 62 kontaktiert werden können.

Das Elektronikmodul 62 kann sämtliche erforderlichen Sensoren, das elektronische Getriebesteuergerät und den Getriebestecker beinhalten.

Die Schaltzylinder 56 können einteilig mit der ersten Hydraulikplatte 50 ausgeführt sein (wie in Fig. 2 gezeigt), können jedoch auch an die Hydraulikplatte 50 angeschraubt sein.

Das Mechatronik-Modul 40 ist vorzugsweise parallel zu den Wellen 14, 16, insbesondere seitlich, oben oder unten am Getriebe 12 angeordnet.

In dem Getriebegehäuse 12 sind nur wenige Bohrungen zur hydraulischen Anbindung der Pumpenanordnung sowie gegebenenfalls (bei Vorgelegegetriebe mit nass laufenden Trennkupplungen) zu der bzw. den Kupplungen vorgesehen.

Fig. 3 zeigt eine alternative Ausführungsform, bei der an einer Hydraulikplatte 50'' ein Schaltzylinder 82 und ein Wählzylinder 84 zur Betätigung einer Schaltwelle 80 festgelegt sind. Die Schaltwelle 80 weist eine Mehrzahl von Schaltfingern 81 auf.

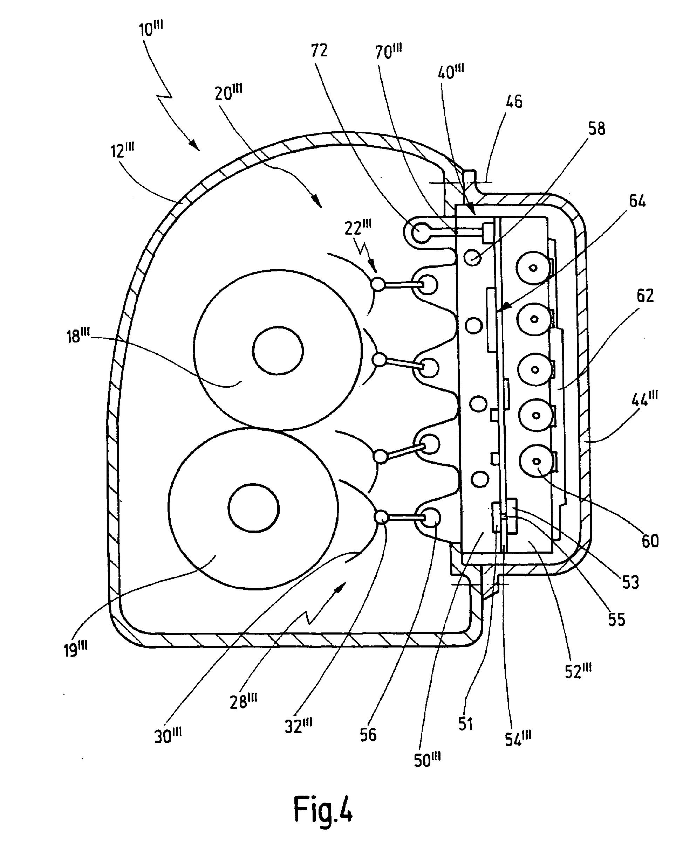

Fig. 4 zeigt eine bevorzugte Ausführungsform des erfindungsgemäßen Vorgelegegetriebes 10'''.

Man erkennt, dass die zwei Platten 50''' und 52''' parallel zueinander ausgerichtet sind und an ihren zueinander weisenden Seiten jeweils Nuten 51, 53 beinhalten, die gemeinsam mit der dazwischen liegenden Dichtplatte 54''' (bzw. den Öffnungen darin) hydraulische Leitungen bilden.

Die elektrisch angesteuerten Ventile 60 sind vorzugsweise auf der getriebeabgewandten Hydraulikplatte 52''' vorgesehen. Die hydraulisch angesteuerten Ventile (Schieberventile) 58 sind vorzugsweise auf der getriebezugewandten Hydraulikplatte 50''' angeordnet. Diese bevorzugte Gruppierung bedeutet jedoch nicht notwendigerweise, dass beispielsweise an der zweiten Hydraulikplatte 52''' keine Schieberventile angeordnet sein können. Auch dort können Schieberventile 58 vorgesehen sein, sofern dies aus Gründen eines besseren Layouts (Routen) der hydraulischen Leitungen sinnvoll ist. In gleicher Weise ist es auch denkbar, an der ersten Hydraulikplatte 50''' in solchen Fällen elektrisch angesteuerte Ventile 60 vorzusehen.

Das Elektronikmodul 62 ist als eine vorgefertigte Einheit mit vorgefertigten Steckverbindungen vorgesehen und wird von außen auf die Außenseite der zweiten Hydraulikplatte 52''' aufgesteckt.

Die Schaltanordnung 20''' beinhaltet eine Mehrzahl von Schalteinheiten 22''' bis 28'''. Diese können jeweils ein Schaltglied 30''' (Schaltgabel oder Schaltwippe) aufweisen und eine separate Schaltstange 32'''. Es ist jedoch auch denkbar, dass die Schalteinheiten 22'''-28''' jeweils als vorgefertigte einstückige Einheiten ausgeführt sind.

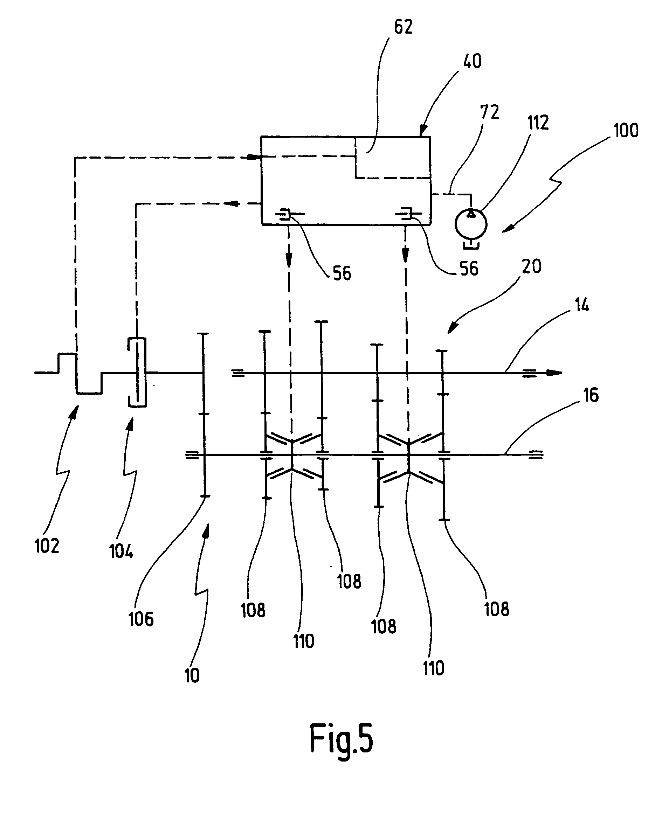

Fig. 5 zeigt in schematischer Form einen Antriebsstrang 100, der eine Antriebseinheit 102, die einen Verbrennungsmotor, eine Kupplungsanordnung 104, wie eine einfache Anfahr- und Trennkupplung (oder eine Doppelkupplung) und ein Vorgelegegetriebe 10 aufweist.

Das Vorgelegegetriebe 10 ist vorzugsweise als Längsgetriebe ausgebildet und weist in an sich bekannter Weise einen eingangsseitigen Konstantenradsatz 106 sowie eine Mehrzahl von Radsätzen 108 auf, die an den Wellen 14, 16 gelagert sind. Ferner sind zwischen den Radsätzen 108 jeweils Schaltkupplungspakete 110 vorgesehen, die mittels der Schaltzylinder 56 betätigbar sind. Es kann jedoch auch ein abtriebsseitiger Konstanten-Radsatz vorgesehen sein.

Fig. 5 zeigt ferner in schematischer Art und Weise die mechanische Verbindung des Mechatronik-Moduls 40 mit den Schaltkupplungspaketen 110, wobei die Zuordnung der Schaltzylinder 56 zu den Schaltmuffen der Schaltkupplungspakete 110 gezeigt ist. Die Schaltkupplungspakete 110 weisen jeweils eine oder zwei Schaltkupplungen auf zum Schalten von Gangstufen, die jeweils durch einen entsprechenden Radsatz 108 realisiert sind.

Die Kupplung 104 ist vorzugsweise ebenfalls mittels des Mechatronik-Moduls 40 angesteuert. Die Ansteuerung kann sich auf die elektrische Ansteuerung von einem der Kupplung 104 zugeordneten Aktuator beschränken. Es ist jedoch auch generell denkbar, dass das Mechatronik-Modul beispielsweise bei einem Doppelkupplungsgetriebe den jeweiligen Hydraulikdruck zur Betätigung der Kupplungen und zur Schmierung/Kühlung bereitstellt.

Ferner ist angedeutet, dass das Mechatronik-Modul 40 auch mit der Antriebseinheit 102 in Verbindung steht, vorzugsweise durch geeignete Sensoren sowie durch die Verbindung zu einer übergeordneten Schalteinheit des Kraftfahrzeugs, in dem das Vorgelegegetriebe 10 integriert ist.

In Fig. 5 ist ferner eine Verbindung 72 zwischen dem Mechatronik-Modul 40 und einer Pumpenanordnung 112 zu erkennen. Eine derartige Verbindung kann, wie es in Fig. 4 gezeigt ist, über einen Gehäusekanal 72 realisiert sein.

Es versteht sich, dass das erfindungsgemäße Vorgelegegetriebe als automatisiertes Schaltgetriebe (ASG), als Doppelkupplungsgetriebe (DKG) ausgebildet sein kann. Es kann jedoch auch als Hybridgetriebe ausgebildet sein.

Der durch das Mechatronik-Modul 40 und den Deckel 44 umschlossene Raum kann mit Öl gefüllt sein, um so zu gewährleisten, dass das Mechatronik-Modul 40 keine Luft zieht. Ferner kann hierdurch ein weiteres Ölreservoir geschaffen werden.

| **Bezugszeichenliste** | | | | **Aktennummer: 2201P263** | |
|---|---|---|---|---|---|
| 1 | | 41 | Seitl. Öffnung an 12 | 81 | Schaltfinger |
| 2 | | 42 | Flanschverbindung. 40/12 | 82 | Schaltzylinder |
| 3 | | 43 | | 83 | |
| 4 | | 44 | Moduldeckel | 84 | Wählzylinder |
| 5 | | 45 | | 85 | |
| 6 | | 46 | Flanschverbindung. 44/12 | 86 | |
| 7 | | 47 | | 87 | |
| 8 | | 48 | | 88 | |
| 9 | | 49 | | 89 | |
| 10 | Vorgelegegetriebe | 50 | 1. Hydraulikplatte | 90 | |
| 11 | | 51 | Leitungsnuten | 91 | |
| 12 | Gehäuse | 52 | 2. Hydraulikplatte | 92 | |
| 13 | | 53 | Leitungsnuten | 93 | |
| 14 | 1. Welle | 54 | Dichtplatte | 94 | |
| 15 | | 55 | Öffnungen | 95 | |
| 16 | 2. Welle | 56 | Schaltzylinder | 96 | |
| 17 | | 57 | | 97 | |
| 18 | 1. Zahnrad | 58 | Schaltventile (Schieberventile) | 98 | |
| 19 | 2. Zahnrad | 59 | | 99 | |
| 20 | Schaltanordnung | 60 | Elektromagnetventile | 100 | Antriebsstrang |
| 21 | | 61 | | 101 | |
| 22 | 1. Schalteinheit | 62 | Elektronikmodul | 102 | Antriebseinheit |
| 23 | | 63 | | 103 | |
| 24 | 2. Schalteinheit | 64 | Baugruppe Verteilung | 104 | Kupplungsanordnung |
| 25 | | 65 | | 105 | |
| 26 | 3. Schalteinheit | 66 | Verbindung 50, 52 | 106 | Konstantenradsatz |
| 27 | | 67 | | 107 | |
| 28 | 4. Schalteinheit | 68 | Elektroanschlüsse | 108 | Radsätze |
| 29 | | 69 | | 109 | |
| 30 | Schaltglied (Gabel) | 70 | Hydraulikanschlüsse | 110 | Schaltkupplungspakete |
| 31 | | 71 | | 111 | |
| 32 | Schaltstange | 72 | Gehäusekanal | 112 | Pumpenanordnung |
| 33 | | 73 | | 113 | |
| 34 | | 74 | | 114 | |
| 35 | | 75 | | 115 | |
| 36 | | 76 | | 116 | |
| 37 | | 77 | | 117 | |
| 38 | | 78 | | 118 | |
| 39 | | 79 | | 119 | |
| 40 | Mechatronic-Modul | 80 | Schaltwelle | 120 | |

## Patentansprüche

1. Automatisiertes Vorgelegegetriebe (10), insbesondere automatisiertes Schaltgetriebe oder Doppelkupplungsgetriebe; mit einem Gehäuse (12); mit wenigstens zwei in Längsrichtung ausgerichteten Wellen (14, 16) und zugehörigen Zahnrädern; mit einer Mehrzahl von Schaltkupplungen (110) zum Einrichten von entsprechenden Gangstufen, wobei die Schaltkupplungen (110) in Längsrichtung der Wellen mittels einer mechanischen Schaltanordnung (20) betätigt werden; und mit einer Aktuatoranordnung (40) zum automatisierten Betätigen der Schaltanordnung (20); wobei die Aktuatoranordnung (40) hydraulische Schaltzylinder (56; 82), die in Längsrichtung der Wellen wirken, eine hydraulische Schaltung (57) mit elektrisch angesteuerten Hydraulikventilen (60) und eine elektrische Steuereinrichtung (62) aufweist, die dazu ausgelegt ist, die Hydraulikventile (60) anzusteuern; wobei die Schaltzylinder (56), die Hydraulikventile (60) und die Steuereinrichtung (62) ein vormontiertes Mechatronik-Modul (40) bilden, das parallel zu den Wellen (14, 16) an dem Gehäuse (12) angebracht ist, derart, dass die Schaltzylinder (56) mit der Schaltanordnung (20) gekoppelt sind, **dadurch gekennzeichnet, dass** das Mechatronik-Modul (40) eine erste Hydraulikeinheit (50), die dem Inneren des Getriebes (10) zugewandt ist, sowie wenigstens eine zweite Hydraulikeinheit (52) aufweist, die auf der dem Inneren des Getriebes (10) abgewandten Seite der ersten Hydraulikeinheit (50) angeordnet ist; und wobei die Schaltzylinder (56) an der ersten Hydraulikeinheit (50) angeordnet sind, und zwar auf der dem Inneren des Getriebes (10) zugewandten Seite.

2. Vorgelegegetriebe nach Anspruch 1, **dadurch gekennzeichnet, dass** die Schaltanordnung (20) eine Mehrzahl von in Längsrichtung ausgerichteten Schalteinheiten (22-28) aufweist, die jeweils ein Schaltglied (30) wie z.B eine Schaltgabel (30) aufweisen.

3. Vorgelegegetriebe nach Anspruch 2, **dadurch gekennzeichnet, dass** das Mechatronik-Modul (40) eine entsprechende Mehrzahl von Schaltzylindem (56) aufweist, die im eingebauten Zustand des Mechatronik-Moduls (40) jeweils eine Schalteinheit (22-28) betätigen.

4. Vorgelegegetriebe nach Anspruch 1, **dadurch gekennzeichnet, dass** die Schaltanordnung (20") eine Schaltwelle (80) aufweist, die eine Mehrzahl von Schaltfingern (81) zur Kopplung mit einer entsprechenden Mehrzahl von Schaltgliedem (30") aufweist.

5. Vorgelegegetriebe nach einem der Ansprüche 1 bis 4, **dadurch gekennzeichnet, dass** der bzw. die Schaltzylinder (56') einstückig mit der ersten Hydraulikeinheit (50') des Mechatronik-Moduls (40) ausgebildet sind.

6. Vorgelegegetriebe nach einem der Ansprüche 1 bis 4, **dadurch gekennzeichnet, dass** der bzw. die Schaltzylinder (56) als separate Einheit hergestellt und mit der ersten Hydraulikeinheit (50) verbunden sind.

7. Vorgelegegetriebe nach einem der Ansprüche 1 bis 6, **dadurch gekennzeichnet, dass** zwischen der ersten und der zweiten Hydraulikeinheit (50, 52) eine Dichtungsanordnung (54) angeordnet ist, so dass die zweite Hydraulikeinheit (52) gegenüber dem Inneren des Getriebes (10) abgedichtet ist.

8. Vorgelegegetriebe nach Anspruch 7, **dadurch gekennzeichnet, dass** die Dichtungsanordnung (54) wenigstens eine hydraulische Verbindung (66) zwischen der ersten und der zweiten Hydraulikeinheit (50, 52) beinhaltet.

9. Vorgelegegetriebe nach einem der Ansprüche 1 bis 8, **dadurch gekennzeichnet, dass** an der ersten Hydraulikeinheit (50) ein oder mehrere hydraulisch betätigte Schieberventile (58) angeordnet sind.

10. Vorgelegegetriebe nach einem der Ansprüche 1 bis 9, **dadurch gekennzeichnet, dass** an der zweiten Hydraulikeinheit (52) elektrisch angesteuerte Hydraulikventile (60) angeordnet sind.

11. Vorgelegegetriebe nach einem der Ansprüche 1 bis 10, **dadurch gekennzeichnet, dass** die elektrische Steuereinrichtung (62) an der zweiten Hydraulikeinheit (52) festgelegt ist.

12. Vorgelegegetriebe nach einem der Ansprüche 1 bis 11, **dadurch gekennzeichnet, dass** die Hydraulikeinheiten (50, 52) jeweils als Hydraulikplatten (50, 52) ausgebildet sind.

13. Vorgelegegetriebe nach Anspruch 12, **dadurch gekennzeichnet, dass** die Hydraulikplatten (50"', 52"') jeweils hydraulische Leitungen aufweisen, die gebildet sind durch offene Nuten (51, 53) in den einander gegenüberliegenden Seiten sowie durch eine dazwischen angeordnete Dichtplatte (54"').

14. Vorgelegegetriebe nach Anspruch 13, **dadurch gekennzeichnet, dass** die Dichtplatte (54"') Öffnungen (55) zur Verbindung der hydraulischen Leitungen aufweist.

15. Vorgelegegetriebe nach einem der Ansprüche 1 bis 14, **dadurch gekennzeichnet, dass** an dem Mechatronik-Modul (40) eine hydraulische Schnittstelle (70) zu einer Pumpenanordnung (112) ausgebildet ist.

16. Vorgelegegetriebe nach einem der Ansprüche 1 bis 15, **dadurch gekennzeichnet, dass** an dem Mechatronik-Modul (40) eine hydraulische Schnittstelle zu einer Kupplungsanordnung (104) ausgebildet ist, die zwischen dem Getriebe (10) und einer Antriebseinheit (102) angeordnet ist.

17. Verfahren zum Herstellen eines Vorgelegegetriebes (10) nach einem der Ansprüche 1 bis 16, mit den Schritten:
- Bereitstellen eines Getriebegehäuses (12), das eine seitliche, d.h. an den Seiten, oben oder unten, Öffnung (41) aufweist;
- Vormontieren von Wellen (14, 16), Zahnrädern (18, 19) und einer mechanischen Schaltanordnung (20) in dem Getriebegehäuse (12), wobei die Schaltanordnung (20) eine Mehrzahl von in Längsrichtung der Wellen ausgerichteten Schalteinheiten (22-28) aufweist, die jeweils ein Schaltglied (30) wie z.B eine Schaltgabel (30) aufweisen;
- Vormontieren eines Mechatronik-Moduls (40), das eine Mehrzahl von hydraulischen Schaltzylindem (56), die mit der Schaltanordnung (20) zu verbinden sind, elektrisch angesteuerte Hydraulikventile (60) sowie eine elektrische Steuereinrichtung (62) aufweist;
- Endmontieren des Mechatronik-Moduls (40) an der seitlichen Öffnung (41) des Getriebegehäuses (12), derart, dass die Schaltzylinder (56) jeweils mit einer Schalteinheit (22-28) der mechanischen Schaltanordnung (20) verbunden werden.

18. Verfahren nach Anspruch 17, wobei der Schritt des Endmontierens in einem Sauberraum erfolgt.

19. Verfahren nach Anspruch 17 oder 18, wobei an dem Mechatronik-Modul (40) vor dem Schritt des Endmontierens Hydraulikventile (60) justiert werden.

20. Verfahren nach einem der Ansprüche 17 bis 19, wobei das Mechatronik-Modul (40) vor dem Schritt des Endmontierens in einem Modul-Prüfstand auf hydraulische und elektrische Funktionsfähigkeit geprüft wird.

21. Verfahren nach einem der Ansprüche 17 bis 20, wobei der Schritt des Endmontierens beinhaltet, eine hydraulische Übergabestelle (70''') zu dem Gehäuse (12"') zu realisieren.

## Claims

1. An automated countershaft transmission (10), in particular an automated shift transmission or double clutch transmission; with a case (12); with at least two shafts (14, 16) oriented in the longitudinal direction and associated gears; with a plurality of shift clutches (110) for setting up corresponding gear stages, the shift clutches (110) being actuated in the longitudinal direction of the shafts by means of a mechanical shift arrangement (20); and with an actuator arrangement (40) for the automated actuation of the shift arrangement (20); the actuator arrangement (40) having hydraulic shift cylinders (56; 82), which act in the longitudinal direction of the shafts; a hydraulic circuit (57) with electrically activated hydraulic valves (60) and an electrical control device (62) which is designed for activating the hydraulic valves (60), wherein the shift cylinders (56), the hydraulic valves (60) and the control device (62) form a preassembled mechatronic module (40) which is mounted, parallel to the shafts (14, 16), on the case (12), in such a way that the shift cylinders (56) are coupled to the shift arrangement (20), **characterized in that** the mechatronic module (40) has a first hydraulic unit (50), which faces the interior of the transmission (10), and at least one second hydraulic unit (52), which is arranged on that side of the first hydraulic unit (50) which faces away from the interior of the transmission (10); and wherein the shift cylinders (56) are arranged on the first hydraulic unit (50), specifically on the side facing the interior of the transmission (10).

2. The countershaft transmission as claimed in claim 1, **characterized in that** the shift arrangement (20) has a plurality of shift units (22-28) which are oriented in the longitudinal direction and which have in each case a shift member (30), such as, for example, a shift fork (30).

3. The countershaft transmission as claimed in claim 2, **characterized in that** the mechatronic module (40) has a corresponding plurality of shift cylinders (56) which in each case actuate a shift unit (22-28) in the installed state of the mechatronic module (40).

4. The countershaft transmission as claimed in claim 1, **characterized in that** the shift arrangement (20") has a gearshift shaft (80) which has a plurality of shift fingers (81) for coupling to a corresponding plurality of shift members (30").

5. The countershaft transmission as claimed in one of claims 1 to 4, **characterized in that** the shift cylinder or shift cylinders (56') are produced in one piece with the first hydraulic unit (50') of the mechatronic module (40).

6. The countershaft transmission as claimed in one of claims 1 to 4, **characterized in that** the shift cylinder or shift cylinders (56) are produced as a separate unit and connected to the first hydraulic unit (50).

7. The countershaft transmission as claimed in one of claims 1 to 6, **characterized in that** a sealing arrangement (54) is arranged between the first and the second hydraulic unit (50, 52), so that the second hydraulic unit (52) is sealed off with respect to the interior of the transmission (10).

8. The countershaft transmission as claimed in claim 7, **characterized in that** the sealing arrangement (54) contains at least one hydraulic connection (66) between the first and the second hydraulic unit (50, 52).

9. The countershaft transmission as claimed in one of claims 1 to 8, **characterized in that** one or more hydraulically actuated slide valves (58) are arranged on the first hydraulic unit (50).

10. The countershaft transmission as claimed in one of claims 1 to 9, **characterized in that** electrically activated hydraulic valves (60) are arranged on the second hydraulic unit (52).

11. The countershaft transmission as claimed in one of claims 1 to 10, **characterized in that** the electrical control device (62) is secured to the second hydraulic unit (52).

12. The countershaft transmission as claimed in one of claims 1 to 11, **characterized in that** the hydraulic units (50, 52) are designed in each case as hydraulic plates (50, 52).

13. The countershaft transmission as claimed in claim 12, **characterized in that** the hydraulic plates (50''', 52'") have in each case hydraulic lines which are formed by open grooves (51, 53) in the sides lying opposite one another and by a sealing plate (54''') arranged between them.

14. The countershaft transmission as claimed in claim 13, **characterized in that** the sealing plate (54''') has orifices (55) for connecting the hydraulic lines.

15. The countershaft transmission as claimed in one of claims 1 to 14, **characterized in that** a hydraulic interface (70) with respect to a pump arrangement (112) is formed on the mechatronic module (40).

16. The countershaft transmission as claimed in one of claims 1 to 15, **characterized in that** a hydraulic interface with respect to a clutch arrangement (104), which is arranged between the transmission (10) and a drive unit (102), is formed on the mechatronic module (40).

17. A method for producing a countershaft transmission (10), having the steps:
- provision of a transmission case (12) which has a lateral orifice (41), that is to say, at one of the sides, at the top or bottom;
- premounting of shafts (14, 16), gearwheels (18, 19) and a mechanical shift arrangement (20) in the transmission case (12), wherein the shift arrangement (20) comprises a plurality of shift units (22-28), which are oriented in the longitudinal direction of the shafts, each shift unit comprising a shift member such as, for example, a shift fork;
- premounting of a mechatronic module (40) which has a plurality of hydraulic shift cylinders (56), which are to be connected to the shift arrangement (20), electrically activated hydraulic valves (60) and an electrical control device (62);
- final mounting of the mechatronic module (40) on the lateral orifice (41) of the transmission case (12), in such a way that the shift cylinders (56) are in each case connected to a shift unit (22-28) of the mechanical shift arrangement (20).

18. The method as claimed in claim 17, the step of final mounting taking place in a clean room.

19. The method as claimed in claim 17 or 18, hydraulic valves (60) being adjusted on the mechatronic module (40) before the step of final mounting.

20. The method as claimed in one of claims 17 to 19, the mechatronic module (40) being tested for hydraulic and electrical functioning capacity on a module test bench before the step of final mounting.

21. The method as claimed in one of claims 17 to 20, the step of final mounting involving implementing a hydraulic transfer point (70''') to the case (12''').

## Revendications

1. Transmission à renvoi (10) automatisée, notamment boîte de vitesses automatisée ou transmission à double embrayage, comprenant un carter (12) ; au moins deux arbres (14, 16) orientés dans le sens longitudinal, avec des pignons associés ; une pluralité d'embrayages (110) pour enclencher des rapports correspondants, lesdits embrayages (110) étant actionnés, dans le sens longitudinal des arbres, au moyen d'un dispositif sélecteur mécanique (20) ; et un dispositif (40) d'actionnement automatisé dudit dispositif sélecteur (20) ; sachant que ledit dispositif d'actionnement (40) comporte des cylindres hydrauliques d'embrayage (56 ; 82) qui agissent dans le sens longitudinal des arbres, un circuit hydraulique (57) muni de soupapes hydrauliques (60) activées électriquement, et un système de commande électrique (62) conçu pour activer lesdites soupapes hydrauliques (60) ; sachant que lesdits cylindres d'embrayage (56), lesdites soupapes hydrauliques (60) et ledit système de commande (62) forment un module mécano-électronique (40) préassemblé qui est monté sur le carter (12), parallèlement aux arbres (14, 16), de telle sorte que les cylindres d'embrayage (56) soient accouplés au dispositif sélecteur (20), **caractérisée par le fait que** le module mécano-électronique (40) comprend une première unité hydraulique (50) tournée vers l'espace interne de la transmission (10), ainsi qu'au moins une seconde unité hydraulique (52) située du côté de ladite première unité hydraulique (50) qui est tourné à l'opposé dudit espace interne de la transmission (10) ; et **par le fait que** les cylindres d'embrayage (56) sont disposés sur la première unité hydraulique (50), plus précisément du côté tourné vers l'espace interne de la transmission (10).

2. Transmission à renvoi selon la revendication 1, **caractérisée par le fait que** le dispositif sélecteur (20) présente une pluralité d'unités de manoeuvre (22-28) orientées dans le sens longitudinal et respectivement munies d'un organe de manoeuvre (30) comme, par exemple, une fourchette d'embrayage (30).

3. Transmission à renvoi selon la revendication 2, **caractérisée par le fait que** le module mécano-électronique (40) présente une pluralité correspondante de cylindres d'embrayage (56) qui actionnent, à chaque fois, une unité de manoeuvre (22-28) à l'état intégré dudit module mécano-électronique (40).

4. Transmission à renvoi selon la revendication 1, **caractérisée par le fait que** le dispositif sélecteur (20") comporte un arbre sélecteur (80) muni d'une pluralité de doigts d'embrayage (81), en vue de l'accouplement avec une pluralité correspondante d'organes de manoeuvre (30").

5. Transmission à renvoi selon l'une des revendications 1 à 4, **caractérisée par le fait que** le ou les cylindre(s) d'embrayage (56') est/sont réalisé(s) d'un seul tenant avec la première unité hydraulique (50') du module mécano-électronique (40).

6. Transmission à renvoi selon l'une des revendications 1 à 4, **caractérisée par le fait que** le ou les cylindre(s) d'embrayage (56) est/sont produit(s) en tant qu'ensemble unitaire distinct, et est/sont relié(s) à la première unité hydraulique (50).

7. Transmission à renvoi selon l'une des revendications 1 à 6, **caractérisée par le fait qu'**un ensemble d'étanchement (54) est interposé entre les première et seconde unités hydrauliques (50, 52), de manière à assurer l'étanchéité de la seconde unité hydraulique (52) vis-à-vis de l'espace interne de ladite transmission (10).

8. Transmission à renvoi selon la revendication 7, **caractérisée par le fait que** l'ensemble d'étanchement (54) renferme au moins une jonction hydraulique (66) entre les première et seconde unités hydrauliques (50, 52).

9. Transmission à renvoi selon l'une des revendications 1 à 8, **caractérisée par le fait qu'**une ou plusieurs soupape(s) (58) à tiroir est (sont) disposée(s) sur la première unité hydraulique (50).

10. Transmission à renvoi selon l'une des revendications 1 à 9, **caractérisée par le fait que** des soupapes hydrauliques (60) activées électriquement sont disposées sur la seconde unité hydraulique (52).

11. Transmission à renvoi selon l'une des revendications 1 à 10, **caractérisée par le fait que** le système de commande électrique (62) est verrouillé à demeure sur la seconde unité hydraulique (52).

12. Transmission à renvoi selon l'une des revendications 1 à 11, **caractérisée par le fait que** les unités hydrauliques (50, 52) sont respectivement réalisées sous la forme de platines hydrauliques (50, 52).

13. Transmission à renvoi selon la revendication 12, **caractérisée par le fait que** les platines hydrauliques (50"', 52"') sont respectivement pourvues de conduites hydrauliques qui sont formées par des rainures ouvertes (51, 53) pratiquées dans les faces situées en vis-à-vis, ainsi que par une plaquette d'étanchement (54''') interposée entre lesdites rainures.

14. Transmission à renvoi selon la revendication 13, **caractérisée par le fait que** la plaquette d'étanchement (54''') comporte des orifices (55) en vue de la liaison des conduites hydrauliques.

15. Transmission à renvoi selon l'une des revendications 1 à 14, **caractérisée par le fait qu'**un interface hydraulique (70) avec un ensemble de pompage (112) est ménagé sur le module mécano-électronique (40).

16. Transmission à renvoi selon l'une des revendications 1 à 15, **caractérisée par** la présence, sur le module mécano-électronique (40), d'un interface hydraulique avec un ensemble d'accouplement (104) interposé entre ladite transmission (10) et une unité d'entraînement (102).

17. Procédé de fabrication d'une transmission à renvoi (10) selon l'une des revendications 1 à 16, englobant les étapes consistant à :
- apprêter un carter (12) de transmission qui comporte une ouverture (41) latérale, c'est-à-dire sur les côtés, en haut et en bas ;
- préassembler des arbres (14, 16), des pignons (18, 19) et un dispositif sélecteur mécanique (20), dans ledit carter (12) de transmission, ledit dispositif sélecteur (20) offrant une pluralité d'unités de manoeuvre (22-28) orientées dans le sens longitudinal des arbres et respectivement munies d'un organe de manoeuvre (30) comme, par exemple, une fourchette d'embrayage (30) ;
- préassembler un module mécano-électronique (40) possédant une pluralité de cylindres hydrauliques d'embrayage (56) devant être reliés audit dispositif sélecteur (20), des soupapes hydrauliques (60) activées électriquement, ainsi qu'un système de commande électrique (62) ;
- effectuer le montage définitif dudit module mécano-électronique (40) sur l'ouverture latérale (41) du carter (12) de transmission, de façon telle que lesdits cylindres d'embrayage (56) soient respectivement reliés à une unité de manoeuvre (22-28) dudit dispositif sélecteur mécanique (20).

18. Procédé selon la revendication 17, l'étape de montage définitif ayant lieu dans un local non pollué.

19. Procédé selon la revendication 17 ou 18, les soupapes hydrauliques (60) étant ajustées sur le module mécano-électronique (40) préalablement à l'étape de montage définitif.

20. Procédé selon l'une des revendications 17 à 19, les aptitudes fonctionnelles hydraulique et électrique du module mécano-électronique (40) étant contrôlées, préalablement à l'étape de montage définitif, dans un banc d'essai pour modules.

21. Procédé selon l'une des revendications 17 à 20, l'étape de montage définitif englobant l'instauration d'une zone (70"') de transfert hydraulique vers le carter (12"') de transmission.
